# EUROPÄISCHE PATENTSCHRIFT

(11) **EP 0 487 507 B1**
(45) Veröffentlichungstag und Bekanntmachung des Hinweises auf die Patenterteilung: **18.10.1995**
(21) Anmeldenummer: 92102185.3
(22) Anmeldetag: 29.06.1989
(51) Int. Cl.: B60T 8/40, B60T 8/88, B60T 17/22, F04B 49/10

(54) **Verfahren zur Überwachung einer hydraulischen Bremsanlage und Bremsanlage zur Durchführung dieses Verfahrens**
Method for monitoring a hydraulic brake system and a brake system for carrying out this method
Procédé de surveillance d'un système hydraulique de freinage et système de freinage pour sa mise en oeuvre

(30) Priorität: 26.08.1988 DE 3828933; 26.08.1988 DE 3828932; 26.08.1988 DE 3828931
(43) Veröffentlichungstag der Anmeldung: 27.05.1992
(62) Teilanmeldung aus: 89907700.2
(73) Patentinhaber: ITT Automotive Europe GmbH, 60488 Frankfurt (DE)
(72) Erfinder: Burgdorf, Jochen, W-6050 Offenbach-Rumpenheim (DE); Volz, Peter, Dr., W-6100 Darmstadt (DE); Fennel, Helmut, W-6232 Bad Soden (DE); Juckenack, Dietrich, Dr., W-6392 Neu Anspach (DE)

(56) Entgegenhaltungen:
- EP-A- 0 183 295
- EP-A- 0 242 936
- EP-A- 0 264 148
- DE-A- 2 046 802
- DE-A- 2 916 490
- DE-A- 3 512 110
- DE-A- 3 731 603
- FR-A- 2 241 709
- PATENT ABSTRACTS OF JAPAN vol. 9, no. 231 (M-414)(1954) 18. September 1985, JP-A-60 088 883 (HITACHI) 18. Mai 1985

## Beschreibung

Die Erfindung bezieht sich auf ein Verfahren zur Überwachung einer hydraulischen, mit einem elektronischen Regler ausgerüsteten Bremsanlage, die Volumen- und/oder Druckpulsationen erzeugende Komponenten aufweist, insbesondere einer Bremsanlage mit Blockierschutz- und/oder Antriebsschlupfregelung, bei dem mit Hilfe von Sensoren die Pulsationen ermittelt und ausgewertet werden. Eine Bremsanlage zur Durchführung des Verfahrens gehört ebenfalls zur Erfindung.

Aus der europäischen Anmeldungsschrift EP-A-0 183 295 ist bereits ein Verfahren zur Messung der Kenndaten einer Hydraulikpumpe bekannt, bei dem mit Hilfe von Sensoren ständig oder in Stichproben die Volumen- und/oder Druckpulsationsbilder, die die Pumpe erzeugt, ausgewertet werden.

Zur Überwachung einer Hydraulikanlage ist nach der Offenlegungsschrift DE-A-35 12 110 eine Vorrichtung vorgesehen, die durch redundante Erfassung der Betriebs- und Ruhezustände von Relaiskontakten einem fehlerhaften, durch Kleben der Kontakte oder Kontaktverschleiß entstandenen Zustand erkennt. Bei Feststellung eines fehlerbedingten Zustandes wird ein Warnsignal abgegeben.

Ferner ist bereits in der EP-A-0 264 148 ein System zum Messen und Überwachen der Durchflußmenge einer Hydraulikpumpe beschrieben, bei dem bestimmte Meßdaten gespeichert und, so oft wie notwendig, z.B. jede Sekunde, zur Berechnung der Fördermenge usw. herangezogen werden.

Schließlich ist in der Offenlegungsschrift DE-A-37 31 603 eine Bremsanlage mit einem Hauptzylinder, Radzylindern und einer Vorrichtung zur Antiblockierregelung beschrieben, bei der im Regelmodus zur Positionierung des Hauptzylinderkolbens eine Pumpe vorgesehen ist, die durch eine hydraulische Leitung mit dem Hauptzylinder verbunden ist.

Der Erfindung liegt nun die Aufgabe zugrunde, ein Überwachungsverfahren der eingangs genannten Art zu entwickeln, das mit großer Zuverlässigkeit, direkt und schnell Fehler anzeigt, die die Funktion der Bremsanlage gefährden könnten.

Es hat sich herausgestellt, daß diese Aufgabe mit dem in Anspruch 1 beschriebenen Verfahren gelöst werden kann. Danach besteht die Besonderheit eines solchen Verfahrens darin, daß ständig oder in Stichproben Bilder der Volumen- und/oder Druckpulsationen erfaßt und mit im elektronischen Regler gespeicherten, ein ordnungsgemäßes Funktionieren der Bremsanlage repräsentierenden Bildern (Standardbildern) verglichen werden, daß eine Übereinstimmung der aufgenommenen (aktuellen) Volumen- und/oder Druckpulsationsbilder mit den Standardbildern als Indiz für ein ordnungsgemäßes Funktionieren der Bremsanlage, insbesondere der die Volumen- und/oder Druckpulsationen erzeugenden Komponenten, ausgewertet wird und daß bei Abweichungen eines oder mehrerer der aktuellen Volumen- und/oder Druckpulsationsbilder von den gespeicherten Standardbildern ein eine Störung anzeigendes Signal erzeugt wird.

Beim Auftreten von Fehlern ermöglicht das erfindungsgemäße Überwachungsverfahren ein frühzeitiges Abschalten der Regelung, mit dem Ziel, sicherzustellen, daß zumindest eine ungeregelte Bremsung möglich bleibt. Das erfindungsgemäße Verfahren läßt sich mit geringem Mehraufwand realisieren, weil die ohnehin vorhandene Elektronik in Verbindung mit wenigen zusätzlichen Sensoren verwendet wird.

Einige besonders vorteilhafte Ausführungsbeispiele des erfindungsgemäßen Verfahrens sowie eine Bremsanlage zur Durchführung des Verfahrens sind in den Unteransprüchen beschrieben.

Ein besonders vorteilhaftes Ausführungsbeispiel der Erfindung, das für eine hydraulische Bremsanlage mit mindestens einem Bauteil, welches durch die Volumen- und/oder Druckpulsationen Körperschallspektra erzeugt, geeignet ist, besteht darin, daß die Körperschallspektra aufgenommen und mit elektronisch gespeicherten, ein ordnungsgemäßes Funktionieren der Hydraulikanlage repräsentierenden Standardspektren verglichen werden, und daß eine Übereinstimmung der aktuellen Körperschallspektra mit den gespeicherten Körperschallspektra als Indiz für ein ordnungsgemäßes Funktionieren der Hydraulikanlage, insbesondere des die Körperschallspektra erzeugenden Bauteils ausgewertet wird und daß bei Abweichungen eines oder mehrerer aktueller Spektra von den Standardspektra ein eine Störung anzeigendes Signal erzeugt wird.

Nach einem weiteren Ausführungsbeispiel der Erfindung, das für eine hydraulische Bremsanlage mit einer motorisch angetriebenen Pumpe Anwendung findet, ist vorgesehen, daß ein oder mehrere Standardvolumen- und/oder Druckpulsationsbilder (Standardbilder), die ein ordnungsgemäßes Funktionieren der Bremsanlage repräsentieren, in ihrer Abhängigkeit von der Motordrehzahl gespeichert werden, daß die aktuellen Volumen- und/oder Druckpulsationsbilder (aktuelle Bilder) bei entsprechender Motordrehzahl mit den Standardbildern verglichen werden und daß bei Abweichungen eines oder mehrerer aktueller Bilder von dem entsprechenden Standardbild ein eine Störung anzeigendes Signal erzeugt wird.

Ferner wird nach einem weiteren Ausführungsbeispiel der Erfindung vorgeschlagen, ein oder mehrere Körperschallspektra (Standardspektra), die ein ordnungsgemäßes Funktionieren der Bremsanlage repräsentieren, in ihrer Abhängigkeit von der Motordrehzahl zu speichern, die aktuellen, in der Bremsdruckregelanlage sensierten Körperschallspektra (aktuelles Spektra) bei entsprechender Motordrehzahl mit den Standardspektra zu vergleichen und bei Abweichung eines oder mehrerer aktueller Spektra von dem entsprechenden Standardspektrum ein eine Störung anzeigendes Signal zu erzeugen.

Zur Durchführung des Überwachungsverfahrens können im Förderstrom der Pumpe ein oder mehrere die aktuellen Volumen- und/oder Druckpulsationen erfassende Sensoren angeordnet werden.

Außerdem ist es möglich, die Bremsanlage dahingehend auszubilden, daß mindestens ein Körperschall erzeugendes Bauteil, ein Pumpenventil, ein Pumpenkolben, ein Teil der Rohrleitungen, ein Tandemhauptzylinder-Regelventil, ein Pumpenantriebsmotor, und zwar eines oder mehrerer dieser Bauteile, mit einem das aktuelle Körperschallspektrum erfassenden Sensor ausgerüstet sind.

Der Pumpenantriebsmotor läßt sich zweckmäßigerweise mit einem Drehzahlsensor ausrüsten, der über eine Signalleitung mit dem elektronischen Regler verbunden ist.

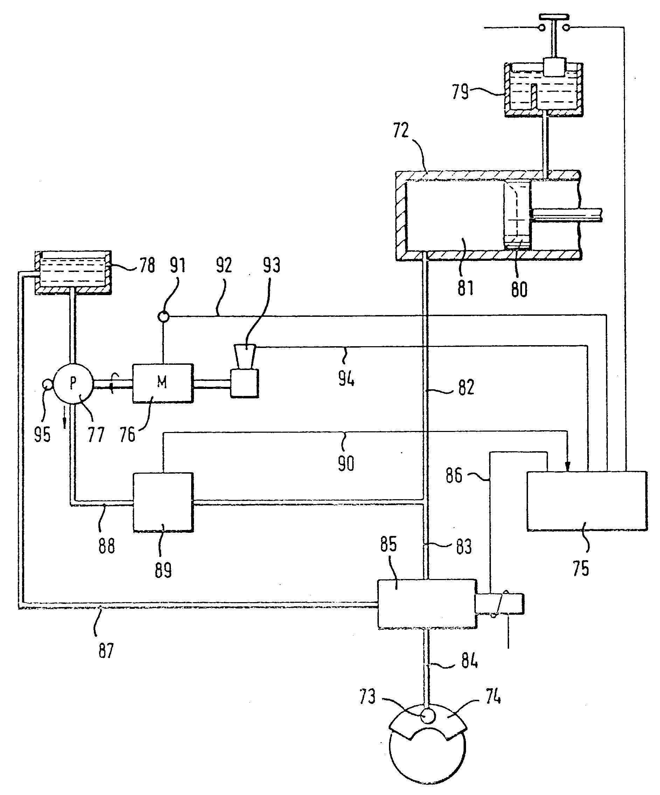

Weitere Einzelheiten der Erfindung gehen aus der folgenden Darstellung eines Ausführungsbeispiels anhand der beigefügten Abbildung hervor, die in schematischer Darstellung die wichtigsten Komponenten eines Antiblockiersystems mit einem Volumen- oder Pulsationssensor zeigt.

In der Figur ist mit 72 die Gesamtheit eines Hauptzylinders bezeichnet. Eine Scheibenbremse 74 ist mit einem Radzylinder 73 ausgerüstet. Mit 75 ist ein elektronischer Regler bezeichnet. 76 ist der Antriebsmotor für die Pumpe 77. 78 ist der Vorratsbehälter für das Druckmedium der Pumpe 77. Mit 79 ist ein Vorratsbehälter des Hauptzylinders der Bremsanlage beziffert.

Wird der Kolben 80 des Hauptzylinders nach links bewegt, baut sich im Druckraum 81 ein hydraulischer Druck auf. Dieser Druck wird durch die Leitungen 82,83,84 an den Radzylinder 73 weitergeleitet. Mit 85 ist ein Druckmodulator, der aus einer Vielzahl von Elektromagnetventilen besteht, bezeichnet. Pars pro toto ist in der Figur das Symbol eines Elektromagnetventils für die Vielzahl der Elektromagnetventile des Druckmodulators eingetragen. Dieser Druckmodulator kann aus mehreren Strom-los-Offen- und Stromlos-Geschlossen-Ventilen bestehen, die elektromagnetisch schaltbar sind, wobei die Schaltungen aufgrund eines im elektronischen Regler 75 installierten Regelalgorithmus erfolgen.

Der Druckmodulator ist in der Lage, die Leitungen 83,84 im Normalbremsmodus zu verbinden. Im Antiblockierregelmodus werden die Ventile des Druckmodulators durch elektrische Leitungen, die sie mit dem elektronischen Regler verbinden, betätigt. In der Figur ist rein symbolisch eine dieser Leitungen dargestellt, sie trägt die Bezugsziffer 86.

Im Regelmodus öffnet oder schließt der Druckmodulator 85 die Verbindung zwischen den Leitungen 83,84. Oder er stellt eine Verbindung von der Leitung 84 zur Leitung 87 her, die zum Vorratsbehälter 78 führt. Die verschiedenen Positionen der Ventilelemente des Modulators können im Radzylinder den gewünschten Druckverlauf erzeugen. Dieser Druckverlauf umfaßt Drucksenkungs-, Druckanstiegs- und Druckonstanthaltephasen. Die Folge und die Länge dieser Phasen wird durch den Regelalgorithmus bestimmt, der im elektronischen Regler gespeichert ist, siehe hierzu den oben zitierten Stand der Technik.

Im Regelmodus kann die Pumpe 78 über die Druckleitungen 88 und 82 Druckmittel in den Druckraum 81 des Hauptzylinders fördern. Außerdem kann die Pumpe 78 über die Druckleitungen 88 und 83 Druckmittel zum Druckmodulator 85 fördern.

In der Leitung 88, die unter Druck steht, sind die von der Pumpe 78 erzeugten Volumen- und/oder Druckpulsationsbilder sensierbar. Mit 89 ist ein Volumen- und/oder Druckpulsationssensor bezeichnet, der diese Bilder aufnimmt, die in Form von elektrischen Signalen über die Signalleitung 90 an den elektronischen Regler weitergeleitet werden.

Selbstverständlich kann der Sensor 89 auch an anderen Teilen der Anlage, insbesondere des Rohrleitungssystems oder im Druckmodulator der Bremsanlage, angeordnet werden, Voraussetzung ist, daß dort von der Pumpe erzeugte Volumen- und/oder Druckpulsationsbilder auftreten.

Der Motor 76 ist mit einem Körperschallsensor 91 versehen. Die Sensorsignale werden über die Signalleitung 92 an den elektronischen Regler weitergeleitet.

Der Motor 76 ist weiterhin mit einem Drehzahlsensor 93 ausgerüstet, der über die Signalleitung 94 mit dem elektronischen Regler verbunden ist.

Es folgt die Beschreibung einiger durch die Anlage gemäß der Figur durchführbarer Verfahren:
Durch den Sensor 89 werden ständig oder in Stichproben Volumen- und/oder Pulsationsbilder aufgenommen. Diese Bilder gelangen, wie dargelegt, in Form von Signalen in den elektronischen Regler. Im elektronischen Regler werden die aktuell gemessenen Volumen- und/oder Druckpulsationsbilder mit einem Volumen- und/oder Druckpulsationsstandardbild, das im elektronischen Regler gespeichert ist, verglichen. Bei jeder oder bei bestimmten Abweichungen der aktuellen Bilder vom Standardbild wird ein eine Störung anzeigendes Signal durch den elektronischen Regler erzeugt.

In einer weiteren Ausführungsform der Erfindung kann vorgesehen sein, daß im elektronischen Regler 75 im Rahmen des Regelalgorithmus oder zusätzlich zum Regelalgorithmus ein Körperschallspektrum elektronisch gespeichert ist, das ein ordnungsgemäßes Funktionieren der Bremsanlage repräsentiert. Durch den Körperschallsensor 91 wird ein aktuelles Körperschallspektrum des Motors ständig oder stichprobenweise aufgenommen und in Form von elektrischen Signalen an den elektronischen Regler weitergeleitet. Im elektronischen Regler wird das aktuelle, d.h. gemessene, Spektrum mit dem gespeicherten Standardspektrum verglichen. Bei jeder oder bei bestimmten Abweichungen wird ein Signal erzeugt, das die Störung anzeigt.

In einer weiteren Ausführungsform der Erfindung werden im elektronischen Regler 75 Standardbilder der Volumen- und/oder Druckpulsation in der Abhängigkeit von der Drehzahl des Motors 76 gespeichert. Sie stellen das Muster dar, das als Vergleichsbasis für die aktuellen Volumen- und/oder Druckpulsationsbilder bei verschiedenen Drehzahlen des Motors dient. Diese sensierten, aktuellen Bilder werden durch den Körperschallsensor 91 bei verschiedenen Drehzahlen aufgenommen und über die Leitung 92 an den elektronischen Regler 75 weitergeleitet. Bei jeder oder bei bestimmten Abweichungen der aktuellen Bilder von den Standardbildern wird ein eine Störung anzeigendes Signal durch den elektronischen Regler erzeugt.

Es können im elektronischen Regler ein oder mehrere Körperschallspektra, die ein ordnungsgemäßes Funktionieren der Bremsdruckregelanlage repräsentieren, als Standardspektra in Abhängigkeit von der Motordrehzahl gespeichert sein. Diese Standardspektra werden dann mit den durch den Körperschallsensor 91 bei verschiedenen Drehzahlen des Motors aufgenommenen aktuellen Spektra verglichen. Bei jeder oder bei bestimmten Abweichungen wird das beschriebene, die Störung anzeigende Signal erzeugt.

Der Körperschallsensor 91, der gemäß der Fig. am Motor angebracht ist, kann in jedem anderen Bereich der Anlage, der einen Körperschall erzeugt, untergebracht werden. Voraussetzung ist, daß der Körperschall eine Indikation über das aktuelle Arbeiten der Anlage darstellt.

Bevorzugte Teile für die Erfassung eines solchen Körperschalls sind Pumpenventile, Pumpenkolben, Teile der Rohrleitungen, Ventile im Tandemhauptzylinder und weitere Teile des Antriebsmotors.

Für die Erfassung des Körperschalls der Teile der Pumpe ist der Sensor 95 vorgesehen.

## Patentansprüche

1. Verfahren zur Überwachung einer hydraulischen, mit einem elektronischen Regler ausgerüsteten Bremsanlage, die Volumen- und/oder Druckpulsationen erzeugende Komponenten aufweist, insbesondere einer Bremsanlage mit Blockierschutz- und/oder Antriebsschlupfregelung, bei dem mit Hilfe von Sensoren die Pulsationen ermittelt und ausgewertet werden,
dadurch **gekennzeichnet,**
daß ständig oder in Stichproben Bilder der Volumen- und/oder Druckpulsationen erfaßt und
mit im elektronischen Regler gespeicherten, ein ordnungsgemäßes Funktionieren der Bremsanlage repräsentierenden Bildern (Standardbildern) verglichen werden,
daß eine Übereinstimmung der aufgenommenen (aktuellen) Volumen- und/oder Druckpulsationsbilder mit den Standardbildern als Indiz für ein ordnungsgemäßes Funktionieren der Bremsanlage, insbesondere der die Volumen- und/oder Druckpulsationen erzeugenden Komponenten, ausgewertet wird und
daß bei Abweichungen eines oder mehrerer der aktuellen Volumen- und/oder Druckpulsationsbilder von den gespeicherten Standardbildern ein eine Störung anzeigendes Signal erzeugt wird.

2. Verfahren nach Anspruch 1, für eine hydraulische Bremsanlage mit mindestens einem Bauteil, welches durch die Volumen- und/oder Druckpulsationen Körperschallspektra erzeugt, dadurch **gekennzeichnet,** daß die Körperschallspektra aufgenommen und mit elektronisch gespeicherten, ein ordnungsgemäßes Funktionieren der Hydraulikanlage repräsentierenden Standardspektren verglichen werden, und daß eine Übereinstimmung der aktuellen Körperschallspektra mit den gespeicherten Körperschallspektra als Indiz für ein ordnungsgemäßes Funktionieren der Hydraulikanlage, insbesondere des die Körperschallspektra erzeugenden Bauteils ausgewertet wird und daß bei Abweichungen eines oder mehrerer aktueller Spektra von den Standardspektra ein eine Störung anzeigendes Signal erzeugt wird.

3. Verfahren nach Anspruch 1 oder 2, für eine hydraulische Bremsanlage mit einer motorisch angetriebenen Pumpe, dadurch **gekennzeichnet,** daß ein oder mehrere Standardvolumen- und/oder Druckpulsationsbilder (Standardbilder), die ein ordnungsgemäßes Funktionieren der Bremsanlage repräsentieren, in ihrer Abhängigkeit von der Motordrehzahl gespeichert werden, daß die aktuellen Volumen- und/oder Druckpulsationsbilder (aktuelle Bilder) bei entsprechender Motordrehzahl mit den Standardbildern verglichen werden und daß bei Abweichungen eines oder mehrerer aktueller Bilder von dem entsprechenden Standardbild ein eine Störung anzeigendes Signal erzeugt wird.

4. Verfahren nach Anspruch 2 oder 3, dadurch **gekennzeichnet,** daß ein oder mehrere Körperschallspektra (Standardspektra), die ein ordnungsgemäßes Funktionieren der Bremsanlage repräsentieren, in ihrer Abhängigkeit von der Motordrehzahl gespeichert werden, daß die aktuellen, in der Bremsdruckregelanlage sensierten Körperschallspektra (aktuelles Spektra) bei entsprechender Motordrehzahl mit den Standardspektra verglichen werden und daß bei Abweichung eines oder mehrerer aktueller Spektra von dem entsprechenden Standardspektrum ein eine Störung anzeigendes Signal erzeugt wird.

5. Bremsanlage zur Durchführung des Verfahrens nach einem oder mehreren der Ansprüche 1 bis 4, dadurch **gekennzeichnet,** daß im Förderstrom einer Pumpe (77) ein oder mehrere die aktuellen Volumen- und/oder Druckpulsation erfassenden Sensoren (89) angeordnet sind.

6. Bremsanlage zur Durchführung des Verfahrens nach einem oder mehreren der Ansprüche 1 bis 4, dadurch **gekennzeichnet,** daß diese mit einem oder mehreren die aktuellen Körperschallspektra erfassenden Sensoren (91,95) ausgerüstet ist.

7. Bremsanlage zur Durchführung des Verfahrens nach einem oder mehreren der Ansprüche 1 bis 4, dadurch **gekennzeichnet,** daß diese eine Hydraulikpumpe (77) mit einem Antriebsmotor (76) aufweist, der mit einem Drehzahlsensor (93) ausgerüstet ist, dessen Ausgangssignal die aktuelle Drehzahl wiedergibt.

## Claims

1. A method for monitoring a hydraulic brake system including an electronic controller and components which generate volume pulsations and/or pressure pulsations, in particular a brake system with anti-lock control and/or traction slip control, wherein the pulsations are ascertained and assessed by sensors,
characterized in that
patterns of the volume pulsations and/or pressure pulsations are ascertained permanently or by way of random tests and compared with patterns (standard patterns) stored in the electronic controller and representative of proper operation of the brake system,
correlation of the picked up (actual) volume pulsation patterns and/or pressure pulsation patterns with the standard patterns is assessed as an indication of proper operation of the brake system, in particular of the components generating the volume pulsations and/or pressure pulsations, and
in the event of deviations of one or a plurality of the actual volume pulsation patterns and/or pressure pulsation patterns from the stored standard patterns a failure indication signal is generated.

2. A method as claimed in claim 1, intended for a hydraulic brake system including at least one component which generates solid-borne sound spectra due to the volume pulsations and/or pressure pulsations,
characterized in that the solid-borne sound spectra are picked up and compared with electronically stored standard spectra, representative of proper operation of the hydraulic system, and in that correlation of the actual solid-borne sound spectra with the stored solid-borne sound spectra is assessed as an indication of proper operation of the hydraulic system, in particular of the component generating the solid-borne sound spectra, and that in the event of deviations of one or a plurality of the actual spectra from the standard spectra a failure indication signal is generated.

3. A method as claimed in claim 1 or 2, intended for a hydraulic brake system including a motively driven pump,
characterized in that one or a plurality of standard volume pulsation patterns and/or pressure pulsation patterns (standard patterns), representative of proper operation of the brake system, are stored in their dependence on the motor speed, in that the actual volume pulsation patterns and/or pressure pulsation patterns (actual patterns), at a corresponding motor speed, are compared with the standard patterns, and in that in the event of deviations of one or a plurality of the actual patterns from the corresponding standard pattern a failure indication signal is generated.

4. A method as claimed in claim 2 or 3,
characterized in that one or a plurality of solid-borne sound spectra (standard spectra), representative of proper operation of the brake system, are stored in their dependence on the motor speed, in that the actual solid-borne sound spectra (actual spectra) sensed in the braking pressure control system, at a corresponding motor speed, are compared with the standard spectra, and in that, in the event of deviation of one or a plurality of the actual spectra from the corresponding standard spectrum, a failure indication signal is generated.

5. A brake system for implementing the method as claimed in any one or more of the claims 1 to 4,
characterized in that one or a plurality of sensors (89) detecting the actual volume pulsations and/or pressure pulsations are arranged in the delivery flow of a pump (77).

6. A brake system for implementing the method as claimed in any one or more of the claims 1 to 4,
characterized in that the brake system is equipped with one or a plurality of sensors (91, 95) detecting the actual solid-borne sound spectra.

7. A brake system for implementing the method as claimed in any one or more of the claims 1 to 4,
characterized in that the brake system includes a hydraulic pump (77) and a drive motor (76) which is equipped with a speed sensor (93), the output signal of which indicates the actual rotational speed.

## Revendications

1. Procédé de surveillance d'un système de freinage hydraulique qui est équipé d'un régulateur électronique et qui comporte des composants produisant des pulsations de volume et/ou de pression, notamment d'un système de freinage à régulation antiblocage et/ou régulation du glissement de traction, selon lequel les pulsations sont relevées et exploitées au moyen de capteurs,
caractérisé en ce que des images des pulsations de volume et/ou de pression sont détectées en permanence ou par prélèvement d'échantillons au hasard et sont comparées à des images qui sont rangées en mémoire dans le régulateur électronique et qui représentent un fonctionnement régulier du système de freinage (images standard),
en ce qu'une coïncidence des images de pulsation de volume et/ou de pression captées (réelles) avec les images standard est exploitée en tant qu'indice d'un fonctionnement régulier du système de freinage, notamment des composants produisant les pulsations de volume et/ou de pression et
en ce qu'en cas d'écarts d'une ou plusieurs des images de pulsation de volume et/ou de pression réelles vis-à-vis des images standard en mémoire, un signal indiquant un défaut est produit.

2. Procédé selon la revendication 1, pour un système de freinage hydraulique comportant au moins un élément structurel qui, sous l'effet des pulsations de volume et/ou de pression, produit des spectres de bruit de structure, caractérisé en ce que les spectres de bruit de structure sont détectés et sont comparés à des spectres standard qui sont rangés en mémoire par la voie électronique et qui représentent un fonctionnement régulier du système hydraulique, en ce qu'une coïncidence des spectres de bruit de structure réels avec les spectres de bruit de structure en mémoire est exploitée en tant qu'indice d'un fonctionnement régulier du système de freinage, notamment des éléments structurels produisant les spectres de bruit de structure et en ce qu'en cas d'écarts d'un ou plusieurs des spectres réels vis-à-vis des spectres standard, un signal indiquant un défaut est produit.

3. Procédé selon la revendication 1 ou 2, pour un système de freinage hydraulique comprenant une pompe à entraînement par moteur, caractérisé en ce qu'une ou plusieurs images de pulsation de volume et/ou de pression standard (images standard), qui représentent un fonctionnement régulier du système de freinage, sont rangées en mémoire en ce qui concerne leur dépendance vis-à-vis du régime du moteur, en ce que les images de pulsation de volume et/ou de pression réelles (images réelles) sont comparées aux images standard pour un régime égal du moteur et en ce qu'en cas d'écarts d'une ou plusieurs des images réelles vis-à-vis de l'image standard correspondante, un signal indiquant un défaut est produit.

4. Procédé selon la revendication 2 ou 3, caractérisé en ce qu'un ou plusieurs spectres de bruit de structure (spectres standard) qui représentent un fonctionnement régulier du système de freinage sont rangés en mémoire en ce qui concerne leur dépendance vis-à-vis du régime du moteur, en ce que les spectres de bruit de structure réels détectés dans le système de régulation de pression de frein (spectres réels) sont comparés aux spectres standard pour un régime égal du moteur et en ce qu'en cas d'écart d'un ou plusieurs des spectres réels vis-à-vis du spectre standard correspondant, un signal indiquant un défaut est produit.

5. Système de freinage pour la mise en oeuvre du procédé selon une ou plusieurs des revendications 1 à 4, caractérisé en ce qu'un ou plusieurs capteurs (89) détectant les pulsations de volume et/ou de pression réelles sont disposés dans l'écoulement de refoulement d'une pompe (77).

6. Système de freinage pour la mise en oeuvre du procédé selon une ou plusieurs des revendications 1 à 4, caractérisé en ce que ce système est équipé d'un ou plusieurs capteurs (91, 95) détectant les spectres de bruit de structure réels.

7. Système de freinage pour la mise en oeuvre du procédé selon une ou plusieurs des revendications 1 à 4, caractérisé en ce que ce système comprend une pompe hydraulique (77) comportant un moteur d'entraînement (76) qui est équipé d'un capteur de régime (93) dont le signal de sortie reproduit le régime réel.
